(19) Europäisches Patentamt / European Patent Office / Office européen des brevets

(11) **EP 4 495 180 A1**

(12) **EUROPEAN PATENT APPLICATION**
published in accordance with Art. 153(4) EPC

(43) Date of publication:
**22.01.2025 Bulletin 2025/04**

(21) Application number: **23780155.0**

(22) Date of filing: **24.03.2023**

(51) International Patent Classification (IPC):
*C08L 11/02* (2006.01)   *C08F 36/18* (2006.01)
*C08F 236/18* (2006.01)   *C08K 3/22* (2006.01)

(52) Cooperative Patent Classification (CPC):
**C08F 36/18; C08F 236/18; C08K 3/22; C08L 11/02**

(86) International application number:
**PCT/JP2023/011786**

(87) International publication number:
**WO 2023/190145 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 JP 2022059379**

(71) Applicant: **Denka Company Limited
Tokyo 103-8338 (JP)**

(72) Inventors:
• **ITO, Misaki
Tokyo 103-8338 (JP)**
• **KUMAGAI, Yushi
Tokyo 103-8338 (JP)**

(74) Representative: **Gulde & Partner
Patent- und Rechtsanwaltskanzlei mbB
Berliner Freiheit 2
10785 Berlin (DE)**

(54) **CHLOROPRENE POLYMER LATEX AND DIP-MOLDED ARTICLE**

(57)     The present invention aims to provide a chloroprene-based polymer latex capable of obtaining a dip-molded product of a chloroprene-based polymer, wherein the dip-molded product has sufficient tensile strength at break and excellent texture.

According to the present invention, provided is a chloroprene-based polymer latex, wherein apparent hardness of a 0.60±0.10 mm-thick dip-molded film containing the chloroprene-based polymer latex, measured at 23°C using a Wallace micro automatic hardness tester, is 25.0 IRHD or more and 40.0 IRHD or less, the 0.60±0.10 mm-thick dip-molded film is a laminate of multiple 0.15 to 0.25 mm-thick dip-molded films, the 0.15 to 0.25 mm-thick dip-molded film is obtained by immersing a ceramic mold to which a calcium-based coagulation liquid has been applied in a chloroprene-based polymer latex composition containing the chloroprene-based polymer latex by an immersion coagulation method, and then subjecting the dip-molded film to a heat-drying treatment at 150°C for 60 minutes.

EP 4 495 180 A1

**Description**

**Technical Field**

This invention relates to a chloroprene-based polymer latex, and a dip-molded product. More precisely, it relates to a chloroprene-based polymer latex containing a chloroprene-based polymer, and a dip-molded product obtained by using a chloroprene-based polymer latex composition.

**Background Art**

Chloroprene-based polymers are known as materials for dip-molded products such as medical surgical gloves, medical examination gloves, industrial gloves, balloons, catheters, and rubber boots.

Various techniques have been proposed for chloroprene polymer latex and chloroprene polymer dip-molded products for dip-molded product applications related to improving the flexibility of chloroprene polymers. Regarding dip-molded product applications, Patent Literature 1 describes a polychloroprene latex with a pH of 7 to 14, which contains 100 parts by mass of modified polychloroprene obtained by copolymerizing chloroprene and methacrylic acid, 90 to 150 parts by mass of water, 1 to 5 parts by mass of emulsifier, 0.5 to 2.5 parts by mass of potassium ion. Regarding dip-molded product applications, Patent Literature 2 describes a mercaptan modified polychloroprene latex, for which chloroprene and 2,3-dichloro-1,3-butadiene are copolymerized, and in the 13C-solid NMR spectrum of polychloroprene, a peak area (A) at 126.2 to 127.6 ppm, a peak area (B) at 122.0 to 126.2 ppm, and a peak area (C) at 129.9 to 130.3 ppm are within the range shown by the following general formula (I). Regarding dip-molded product applications, Patent Literature 3 describes a chloroprene polymer latex that can achieve both excellent flexibility and mechanical properties in a vulcanized rubber produced by dip-molding by containing a high molecular weight substance and a low molecular weight substance. Patent Literature 4 describes chloroprene polymer latex that exhibits excellent flexibility and mechanical properties even under mild vulcanization conditions by copolymerizing chloroprene monomer and isoprene monomer, the raw material of isoprene rubber.

$$\frac{4.0}{100} \leqq \frac{A}{B-C} \leqq \frac{5.8}{100} \quad \cdots \quad (\mathrm{I})$$

**Citation List**

**Patent Literature**

Patent Literature 1: JP-A-2014-114342
Patent Literature 2: WO2019/009038
Patent Literature 3: JP-A-2019-143002
Patent Literature 4: WO2021/132460

**Summary of Invention**

**Technical Problem**

Chloroprene-based polymer latex has been used as a raw material for rubber latex in dip-molded product coatings such as gloves, balloons, boots, and catheters and the like. In particular, in applications for medical rubber gloves, there is a tendency to demand high flexibility similar to dip-molded products obtained by using natural rubber or polyisoprene, and development of a chloroprene-based polymer latex is desired which can give a dip-molded product having excellent texture when made into a dip-molded film.

Therefore, the present invention aims to provide a chloroprene-based polymer latex capable of obtaining a dip-molded product of a chloroprene-based polymer, wherein the dip-molded product has sufficient tensile strength at break and excellent texture.

**Solution to Problem**

According to the present invention, provided is a chloroprene-based polymer latex comprising a chloroprene-based polymer, wherein apparent hardness of a 0.60±0.10 mm-thick dip-molded film containing the chloroprene-based polymer latex, measured at 23°C using a Wallace micro automatic hardness tester, is 25.0 IRHD or more and 40.0 IRHD or less, the 0.60±0.10 mm-thick dip-molded film is a laminate of multiple 0.15 to 0.25 mm-thick dip-molded films, the 0.15 to 0.25 mm-thick dip-molded film is obtained by immersing a ceramic mold to which a calcium-based coagulation liquid has been applied in a chloroprene-based polymer latex composition containing the chloroprene-based polymer latex by an immersion coagulation method, and then subjecting the dip-molded film to a heat-drying treatment at 150°C for 60 minutes.

Various embodiments of the present invention are illustrated below. The embodiments shown below can be combined with each other.

Preferably, the chloroprene-based polymer latex described above has at least a peak with a weight average molecular weight of 3,000 to 80,000 detected, when the chloroprene-based polymer latex is freeze-dried, dissolved in tetrahydrofuran, and a soluble portion is measured by gel permeation chromatography.

Preferably, the chloroprene-based polymer latex described above contains 2,3-dichloro-1,3-butadiene monomer units.

Preferably, the chloroprene-based polymer latex described above contains 1 to 25% by mass of 2,3-dichloro-1,3-butadiene monomer units with respect to 100% by mass in total of chloroprene monomer units and 2,3-dichloro-1,3-butadiene monomer units.

Preferably, the chloroprene-based polymer latex described above has a toluene-insoluble content of 45 to 85% by mass of the solid component obtained by freeze-drying the chloroprene-based polymer latex.

According to another aspect of the present invention, provided is a dip-molded product using the chloroprene-based polymer latex described above.

Preferably, the dip-molded product described above contains a metal oxide and an antioxidant.

Preferably, the dip-molded product described above is an industrial or general household glove, a medical glove, a balloon, a catheter, or a boot.

In the present invention, "JIS" means Japanese Industrial Standards.

Effects of Invention

According to the present invention, provided is a chloroprene-based polymer latex capable of obtaining a dip-molded product of a chloroprene-based polymer, wherein the dip-molded product has sufficient tensile strength at break, and is soft and excellent in texture.

**Description of Embodiments**

Hereinafter, embodiments for carrying out the present invention will be described in detail. Note that the present invention is not limited to the embodiments described below.

1. Chloroprene-based polymer latex

First, a chloroprene-based polymer latex of one embodiment of the present invention will be described.

1.1 Chloroprene-based Polymer

The chloroprene-based polymer described in this embodiment is a polymer containing a monomer unit derived from 2-chloro-1,3-butadiene (hereinafter also referred to as chloroprene). In addition, the chloroprene-based polymer of one embodiment of the present invention can also be a copolymer of chloroprene and other monomers copolymerizable with chloroprene. Examples of other monomers include 1-chloro-1,3-butadiene, 2,3-dichloro-1,3-butadiene, isoprene, styrene, methacrylic acid, acrylonitrile, sulfur, and the like. As other monomers, two or more types of these may be used in combination. The chloroprene-based polymer of one embodiment of the present invention preferably contains a monomer unit derived from 2,3-dichloro-1,3-butadiene. The chloroprene-based polymer of one embodiment of the present invention may not contain sulfur, and the chloroprene-based polymer of one embodiment of the present invention may not have an -S-S-structure caused by sulfur in the main chain.

The chloroprene-based polymer according to one embodiment of the present invention may be obtained by mixing two or more different chloroprene-based polymers. The chloroprene-based polymer contains at least one selected from the group consisting of a homopolymer of chloroprene (2-chloro-1,3-butadiene), a copolymer of chloroprene and 1-chloro-1,3-butadiene, a copolymer of chloroprene and 2,3-dichloro-1,3-butadiene, and a copolymer of chloroprene, 1-chloro-1,3-butadiene and 2,3-dichloro-1,3-butadiene, and more preferably contains at least one of a homopolymer of chloroprene and a copolymer of chloroprene and 2,3-dichloro-1,3-butadiene.

The chloroprene-based polymer according to one embodiment of the present invention can contain 50 to 100% by mass, preferably 70 to 100% by mass of monomer unit derived from chloroprene, when the chloroprene-based polymer contained in the chloroprene-based polymer latex composition is 100% by mass. The content of monomer unit derived from chloroprene is, for example, 50, 55, 60, 65, 70, 75, 80, 85, 90, 91, 92, 93, 94, 95, 96, 97, 98, 99, or 100% by mass, and may be in the range between the two values exemplified herein.

The chloroprene-based polymer of one embodiment of the present invention can contain 1 to 25% by mass of monomer unit derived from 2,3-dichloro-1,3-butadiene, when the total of chloroprene monomer units and 2,3-dichloro-1,3-butadiene monomer units in the chloroprene-based polymer contained in the chloroprene-based polymer latex composition is 100% by mass. The content of monomer unit derived from 2,3-dichloro-1,3-butadiene is, for example, 1, 2, 3, 4, 5, 6, 7, 8, 9, 10, 11, 12, 13, 14, 15, 16, 17, 18, 19, 20, 21, 22,23, 24, or 25% by mass, and may be in the range between the two values exemplified herein.

The chloroprene-based polymer of an embodiment of the present invention may contain monomer units derived from chloroprene and monomer units derived from 2,3-dichloro-1,3-butadiene, or may be composed of monomer units derived from chloroprene and monomer units derived from 2,3-dichloro-1,3-butadiene.

In addition, when the chloroprene-based polymer is a mixture of two or more different chloroprene-based polymers, the content of each monomer unit means the total of each monomer unit in all chloroprene-based polymers contained in the chloroprene-based polymer latex.

1.2 Chloroprene-based Polymer Latex

The chloroprene-based polymer latex of an embodiment of the present invention may be one in which a chloroprene-based polymer is dispersed in water, and may be one in which at least one selected from the group consisting of a chloroprene homopolymer, a copolymer of chloroprene and 1-chloro-1,3-butadiene, a copolymer of chloroprene and 2,3-dichloro-1,3-butadiene, and a copolymer of chloroprene, 1-chloro-1,3-butadiene, and 2,3-dichloro-1,3-butadiene is dispersed in water, and may be one in which the chloroprene homopolymer or the copolymer of chloroprene and 2,3-dichloro-1,3-butadiene is dispersed in water.

1.2.1 Apparent Hardness of Dip-molded Film Containing Chloroprene-based Polymer Latex

The chloroprene-based polymer latex of an embodiment of the present invention has an apparent hardness of a $0.60 \pm 0.10$ mm-thick dip-molded film containing the chloroprene-based polymer latex, which is measured at 23°C using a Wallace micro automatic hardness tester, of 25 IRHD or more and 40 IRHD or less. The apparent hardness of the dip-molded film containing the chloroprene-based polymer latex is, for example, 25.0, 27.0, 28.0, 29.0, 30.0, 31.0, 32.0, 33.0, 34.0, 35.0, 36.0, 37.0, 38.0, 39.0, or 40.0 IRHD, and may be in the range between the two values exemplified herein.

Here, the $0.60 \pm 0.10$ mm-thick dip-molded film is a laminate of multiple 0.15 to 0.25 mm-thick dip-molded films, and the 0.15 to 0.25 mm-thick dip-molded films can be formed by an immersion coagulation method. The 0.15 to 0.25 mm-thick dip-molded films can be obtained by immersing a ceramic mold to which a calcium-based coagulation liquid has been applied in the chloroprene-based polymer latex composition containing the chloroprene-based polymer latex to form a dip-molded film, and subjecting the obtained dip-molded film to a heat-drying treatment at 150°C for 60 minutes. In this measurement, samples having the shape described above are used, and for other conditions, the International Rubber Hardness IRHD measured in accordance with JIS K 6253-2 is taken as the apparent hardness. The hardness measured by the above method based on JIS K 6253-1 is referred to as the "apparent hardness".

The method for producing the dip-molded product, and the measurement method of the "apparent hardness" (International Rubber Hardness IRHD) can be specifically as described in the Examples.

The apparent hardness of the dip-molded film containing the chloroprene-based polymer latex can be controlled by adjusting the types and amounts of raw materials blended and polymerization conditions in producing the chloroprene-based polymer latex, and by adjusting the type (weight average molecular weight, type and content of monomer units contained, and the like) and amount of the chloroprene-based polymer contained in the chloroprene-based polymer latex.

1.2.2 Weight Average Molecular Weight of Chloroprene-based Polymer Latex

The chloroprene-based polymer latex of an embodiment of the present invention preferably has a peak with a weight average molecular weight of 3,000 to 80,000 detected, when the chloroprene-based polymer latex is freeze-dried, dissolved in tetrahydrofuran, and the soluble content is measured by gel permeation chromatography. More preferably, a peak with a weight average molecular weight of 5,000 to 50,000 is detected. In other words, the chloroprene-based polymer latex of an embodiment of the present invention preferably contains a low molecular weight chloroprene-based polymer having a weight average molecular weight of 3,000 to 80,000, and more preferably contains a low molecular weight chloroprene-based polymer having a weight average molecular weight of 5,000 to 50,000.

When the weight average molecular weight of the low molecular weight chloroprene-based polymer is equal to or more than the above lower limit, a dip-molded product having more excellent tensile strength at break can be obtained. The weight average molecular weight of the low molecular weight chloroprene-based polymer may be 10,000 or more, or 15,000 or more, from the viewpoint of more easily obtaining the dip-molded product.

When the weight average molecular weight of the low molecular weight chloroprene-based polymer is equal to or less than the upper limit, a dip-molded product having a lower apparent hardness can be obtained. The weight average molecular weight of the low molecular weight chloroprene-based polymer may be equal to or less than 80,000, equal to or less than 70,000, equal to or less than 50,000, or equal to or less than 30,000, from the viewpoint of easily obtaining even more excellent flexibility.

The peaks detected in the range of 3,000 to 80,000 of the weight average molecular weight have the weight average molecular weight of, for example, 3,000, 4,000, 5,000, 6,000, 7,000, 8,000, 9,000, 10,000, 11,000, 12,000, 13,000, 14,000, 15,000, 16,000, 17,000, 18,000, 19,000, 20,000, 21,000, 22,000, 23,000, 24,000, 25,000, 26,000, 27,000, 28,000, 29,000, 30,000, 35,000, 40,000, 50,000, 60,000, 70,000, or 80,000, and may be in the range between the two values exemplified herein.

The chloroprene-based polymer latex of an embodiment of the present invention has the above-mentioned molecular weight distribution, and therefore the apparent hardness of the dip-molded film can be appropriately adjusted.

The chloroprene-based polymer latex of an embodiment of the present invention preferably further has a peak with a weight average molecular weight of 500,000 to 1,500,000 detected, when the chloroprene-based polymer latex is freeze-dried, dissolved in tetrahydrofuran, and the soluble content is measured by gel permeation chromatography. In other words, the chloroprene-based polymer latex of an embodiment of the present invention preferably contains a high molecular weight chloroprene-based polymer having a weight average molecular weight of 500,000 to 1,500,000. The weight average molecular weight of the peak detected in the range of 500,000 to 1,500,000 of the weight average molecular weight may be, for example, 500,000, 600,000, 700,000, 800,000, 900,000, 1,000,000, 1,200,000, 1,300,000, 1,400,000, or 1,500,000, and may be in the range between the two values exemplified herein.

The weight average molecular weight of the chloroprene-based polymer can be controlled in the polymerization of each chloroprene-based polymer by adjusting the type and amount of a chain transfer agent, polymerization temperature, polymerization time, polymerization conversion rate, and the like. In addition, the apparent hardness of the dip-molded product containing the chloroprene-based polymer latex can be adjusted by adjusting the weight average molecular weight of the chloroprene-based polymer or the mixing ratio of chloroprene-based polymers having different weight average molecular weights.

The molecular weight distribution of the tetrahydrofuran-soluble sol content in the chloroprene-based polymer latex can be obtained by measurement of the weight average molecular weight by gel permeation chromatography. Specifically, the chloroprene-based polymer latex is freeze-dried and dissolved in tetrahydrofuran, and the eluted content (sol content) is analyzed by gel permeation chromatography (GPC). The measurement conditions for GPC can be as described in the Examples.

In addition, the molecular weight distribution of the tetrahydrofuran-soluble sol content in the chloroprene-based polymer latex contained in the chloroprene-based polymer latex composition can also be obtained by using the chloroprene-based polymer latex composition as the analysis target, freeze-drying the chloroprene-based polymer latex composition, dissolving it in tetrahydrofuran, and performing the analysis in the same manner. The molecular weight distribution of the tetrahydrofuran-soluble sol content in the chloroprene-based polymer latex contained in the chloroprene-based polymer latex composition can also be obtained by using the dip-molded product as the analysis target, dissolving the dip-molded product in tetrahydrofuran, and performing the analysis in the same manner.

The chloroprene-based polymer latex of the present invention can be obtained by mixing two or more types of chloroprene-based polymer latexes having different weight average molecular weights, and by mixing two or more types of the chloroprene-based polymer latexes having different weight-average molecular weights, a chloroprene-based polymer latex having a weight average molecular weight peak detected in the above range in the molecular weight distribution may be obtained. When two or more types of the chloroprene-based polymer latexes are mixed, the weight average molecular weight of each chloroprene-based polymer latex can be controlled by adjusting the type and amount of the chain transfer agent, polymerization temperature, polymerization time, polymerization conversion rate, and the like, in the polymerization of each chloroprene-based polymer latex. When two or more types of the chloroprene-based polymer latexes are used, two or more types of the chloroprene-based polymer latexes may be stirred and mixed with a paddle blade at 100 rpm for 2 minutes to obtain the chloroprene-based polymer latex.

The chloroprene-based polymer latex of an embodiment of the present invention preferably has a peak with a weight average molecular weight of 3,000 to 80,000 and a peak with a weight average molecular weight of 500,000 to 1,500,000 detected in the molecular weight distribution, obtained by which the chloroprene-based polymer latex is freeze-dried, dissolved in tetrahydrofuran, and the soluble content is measured by gel permeation chromatography. In other words, the chloroprene-based polymer latex of an embodiment of the present invention preferably contains a chloroprene-based polymer having a weight average molecular weight of 3,000 to 80,000 and a chloroprene-based polymer having a weight average molecular weight of 500,000 to 1,500,000.

The chloroprene-based polymer latex of an embodiment of the present invention preferably contains 5 to 40% by mass of the chloroprene-based polymer having a weight average molecular weight of 3,000 to 80,000, when the chloroprene-based polymer contained in the chloroprene-based polymer latex is 100% by mass. The chloroprene-based polymer latex of an embodiment of the present invention may contain, when the chloroprene-based polymer contained in the chloroprene-based polymer latex is 100% by mass, the chloroprene-based polymer having a weight average molecular weight of 5,000 to 50,000, for example, 5, 10, 15, 20, 25, 30, 35, or 40% by mass, and may be in the range between the two values exemplified herein.

The chloroprene-based polymer latex of an embodiment of the present invention preferably contains 60 to 95% by mass of the chloroprene-based polymer having a weight average molecular weight of 500,000 to 1,500,000, when the chloroprene-based polymer contained in the chloroprene-based polymer latex is 100% by mass. The chloroprene-based polymer latex of an embodiment of the present invention may contain, when the chloroprene-based polymer contained in the chloroprene-based polymer latex is 100% by mass, the chloroprene-based polymer having a weight average molecular weight of 500,000 to 1,500,000, for example, 60, 65, 70, 75, 80, 85, 90, or 95% by mass, and may be in the range between the two values exemplified herein.

By adjusting the content ratio of the chloroprene-based polymers having different weight average molecular weights within the above numerical range, the apparent hardness can be more appropriately adjusted.

1.2.3 Copolymerization Amount of 2,3-dichloro-1,3-butadiene in Chloroprene-based Polymer Contained in Chloroprene-based Polymer Latex

The copolymerization amount of 2,3-dichloro-1,3-butadiene in the chloroprene-based polymer contained in the chloroprene-based polymer latex of an embodiment of the present invention is, when the total of the monomer units derived from chloroprene and the monomer units derived from 2,3-dichloro-1,3-butadiene contained in the chloroprene-based polymer is 100% by mass, preferably 1 to 25% by mass, and more preferably 5 to 25% by mass. The copolymerization amount of the component is, for example, 1, 2, 5, 8, 9, 10, 12, 15, 20, or 25% by mass, and may be in the range between the two values exemplified herein.

The chloroprene-based polymer contained in the chloroprene-based polymer latex of an embodiment of the present invention may have the copolymerization amount of 2,3-dichloro-1,3-butadiene within the above numerical range, so that the apparent hardness of the dip-molded film obtained using the chloroprene-based polymer latex can be more appropriately adjusted, and the dip-molded product having sufficient tensile strength at break and more excellent texture can be easily obtained. The copolymerization amount of 2,3-dichloro-1,3-butadiene may be adjusted by preparing two or more types of the chloroprene-based polymer latexes having different copolymerization amounts of the component, and adjusting the mixing ratio of the latexes. The copolymerization amount of 2,3-dichloro-1,3-butadiene in each chloroprene-based polymer latex can be adjusted by controlling the type and amount of raw materials blended, polymerization conditions and the like during polymerization of each chloroprene-based polymer latex.

The "2,3-dichloro-1,3-butadiene copolymerization amount" can be determined by analyzing the chloroprene-based polymer latex or the chloroprene-based polymer latex composition, cutting the dried material obtained by freezing the chloroprene-based polymer latex or the chloroprene-based polymer latex composition, and measuring the 2,3-dichloro-1,3-butadiene copolymerization amount in the chloroprene-based polymer latex (contained in the chloroprene-based polymer latex composition) by pyrolysis gas chromatography. The object of analysis can also be the dip-molded product.

1.2.4 Toluene-insoluble Content of Chloroprene-based Polymer Latex

The toluene-insoluble content (gel content) of the chloroprene-based polymer latex of an embodiment of the present invention can be 45 to 85% by mass, more preferably 60 to 80% by mass, based on the solid content obtained by freeze-drying the chloroprene-based polymer latex. The toluene-insoluble content may be, for example, 45, 50, 55, 60, 65, 70, 75, 80, or 85% by mass, and may be in the range between the two values exemplified herein. By setting the toluene-insoluble content within the above numerical range, more excellent tensile strength at break is achieved. This numerical range can be adjusted by preparing two or more types of chloroprene-based polymer latexes having different toluene-insoluble contents and adjusting the mixing ratio. In addition, the toluene-insoluble content in each chloroprene-based polymer latex can be adjusted by controlling the types and amounts of raw materials blended, polymerization conditions, and the like during polymerization of each chloroprene-based polymer latex.

The "toluene-insoluble content" is determined by cutting 1 g of chloroprene-based polymer rubber obtained by freeze-drying the chloroprene-based polymer latex into 2 mm squares, dissolving in toluene for 16 hours, centrifuging, separating the insoluble content with a 200 mesh wire net, and measuring the weight of the dried product. The toluene-insoluble content can be calculated using the following formula.

(Mass of solid obtained by separating and drying the gel content)/(Mass of solid obtained by freeze- drying the latex containing the chloroprene-based polymer) $\times$ 100

In addition, the object of analysis can be the chloroprene-based polymer latex composition, and by analyzing the dried product obtained by freezing the chloroprene-based polymer latex composition in the same manner as above, the toluene-insoluble content of the chloroprene-based polymer latex contained in the chloroprene-based polymer latex composition can also be determined. The object of analysis can be a dip-molded product, and by analyzing the dip-molded product in the same manner as above, the toluene-insoluble content in the chloroprene-based polymer latex contained in the dip-molded product can also be determined.

1.2.5 Tensile Strength at Break of Dip-molded Film Containing Chloroprene-based Polymer Latex

The chloroprene-based polymer latex of an embodiment of the present invention can have a tensile strength at break of 16.0 MPa or more, preferably 17.0 MPa or more, of the dip-molded film containing the chloroprene-based polymer latex. The tensile strength at break is, for example, 16.0, 17.0, 18.0, 19.0, 20.0, 21.0, 22.0, 23.0, 24.0, 25.0, 26.0, 27.0, 28.0, 29.0, or 30.0 MPa, and may be in the range between the two values exemplified herein. The chloroprene-based polymer latex of an embodiment of the present invention can have tensile strength at break within the above-mentioned numerical range by adjusting the type (weight average molecular weight, type and content of monomer units contained therein, and the like), amount and the like of the chloroprene-based polymer contained in the chloroprene-based polymer latex, so that the dip-molded product containing the chloroprene-based polymer latex tends to have sufficient tensile strength at break and excellent texture.

1.2.6. Method for Producing Chloroprene-based Polymer Latex

Next, a method for producing the chloroprene-based polymer latex of the present invention will be described.
The method for producing the chloroprene-based polymer latex may include a polymerization step of polymerizing a monomer containing chloroprene to obtain a chloroprene-based polymer latex. In addition, the method for producing the chloroprene-based polymer latex may further include a mixing step of mixing two or more types of chloroprene-based polymer latex with different weight average molecular weights.
In the polymerization step, the monomer includes chloroprene, and can also include other monomers copolymerizable with chloroprene. Examples of other monomers copolymerizable with chloroprene include 1-chloro-1,3-butadiene, 2,3-dichloro-1,3-butadiene, isoprene, styrene, methacrylic acid, acrylonitrile, sulfur, and the like. The monomer may also include chloroprene and 2,3-dichloro-1,3-butadiene.
Preferably, the type and amount of each monomer is adjusted so that the content ratio of each monomer unit in the obtained chloroprene-based polymer is within the numerical range described above. As an example, the copolymerization amount of 2,3-dichloro-1,3-butadiene in the chloroprene-based polymer contained in the chloroprene-based polymer latex can also be in the range of 1 to 25% by mass with respect to total 100% by mass of the chloroprene monomer and 2,3-dichloro-1,3-butadiene contained in the chloroprene-based polymer. In this case, the amount of 2,3-dichloro-1,3-butadiene charged before the start of emulsion polymerization is preferably in the range of 1 to 25 parts by mass with respect to total 100 parts by mass of chloroprene monomer and 2,3-dichloro-1,3-butadiene monomer. From the viewpoint of polymerization control, the amount of 2,3-dichloro-1,3-butadiene charged is more preferably 5 to 25 parts by mass with respect to total 100 parts by mass of chloroprene monomer and 2,3-dichloro-1,3-butadiene monomer.
When producing a chloroprene-based polymer, raw monomers are polymerized by a polymerization method such as emulsion polymerization, solution polymerization, suspension polymerization, or bulk polymerization. Among these polymerization methods, emulsion polymerization is preferred because it has various advantages such as easy control, easy removal of polymer from the polymerization-completed solution and relatively high polymerization rate.
Emulsion polymerization is a type of radical polymerization, in which raw material monomers are introduced into a reaction vessel together with a chain transfer agent, water, an alkali (e.g., metal hydroxide such as potassium hydroxide, sodium hydroxide), an emulsifier (dispersant), a reducing agent (e.g., sodium bisulfite), a polymerization initiator, etc., and then polymerized.
As the type of chain transfer agent used during emulsion polymerization is not particularly limited, those commonly used in emulsion polymerization of chloroprene can be used. Examples thereof include long chain alkyl mercaptans such as n-dodecyl mercaptan and tert-dodecyl mercaptan, dialkyl xanthogen disulfides such as diisopropyl xanthogen disulfide and diethyl xanthogen disulfide, iodoform, etc. As the chain transfer agent, long chain alkyl mercaptans are preferred, and n-dodecyl mercaptan is more preferred.

By adjusting the type and amount of the chain transfer agent, the weight average molecular weight of the obtained chloroprene-based polymer latex can be adjusted.

As an example, in order to obtain a latex containing chloroprene-based polymer with a weight average molecular weight of 500,000 or more, that is, in order to obtain a chloroprene-based polymer latex for which a first peak exhibiting the weight average molecular weight of 500,000 or more is detected in the molecular weight distribution, the amount of the chain transfer agent charged before the start of emulsion polymerization is preferably 0.01 parts by mass or more, with respect to 100 parts by mass of monomers (for example, a total of 100 parts by mass of chloroprene and 2,3-dichloro-1,3-butadiene). From the viewpoint of obtaining a chloroprene-based polymer latex for which a peak exhibiting a weight average molecular weight of 500,000 or more is detected, the amount of chain transfer agent charged is more preferably 0.02 to 0.05 parts by mass, for example, 0.01, 0.02, 0.03, 0.04, 0.05, 0.06, 0.07, 0.08, or 0.09 parts by mass, less than 0.10 parts by mass, and may be in the range between the two values exemplified herein. When the amount of chain transfer agent, especially long chain alkyl mercaptans charged is 0.01 parts by mass or more, the storage stability of the latex is further improved, and when the charging amount is less than 0.10 parts by mass, especially less than 0.05 parts by mass, the amount of toluene insoluble content increases, and the obtained dip-molded product containing the chloroprene-based polymer latex has a higher tensile strength at break.

In addition, in order to obtain a latex containing the chloroprene-based polymer with a weight average molecular weight of 3,000 to 80,000, that is, in order to obtain a chloroprene-based polymer latex for which a peak exhibiting a weight average molecular weight of 3,000 to 80,000 is detected in the molecular weight distribution, the amount of chain transfer agent charged before the start of emulsion polymerization is preferably 0.5, 1.0 to 10.0 parts by mass, with respect to 100 parts by mass of monomers. In this case, the charging amount is, for example, 0.5, 1.0, 2.0, 3.0, 4.0, 5.0, 6.0, 7.0, 8.0, 9.0, or 10.0 parts by mass, and may be in the range between the two values exemplified herein.

Examples of the emulsifier include anionic emulsifiers and nonionic emulsifiers. Examples of anionic emulsifiers include fatty acid salts such as beef tallow fatty acid potassium salt, partially hydrogenated beef tallow fatty acid potassium salt, potassium oleate, and sodium oleate; resin acid salts such as potassium rosinate, sodium rosinate, hydrogenated potassium rosinate, and hydrogenated sodium rosinate; alkylbenzene sulfonates such as sodium dodecylbenzenesulfonate; and sodium salt of β-naphthalenesulfbnic acid formalin condensate, and the like. Examples of nonionic emulsifiers include polyethylene glycol ester emulsifiers, polyvinyl alcohol, and the like. Among these, anionic emulsifiers are preferred, resinates are preferred, rosin acid and rosin acid salt as rosin acids are preferred, and at least one selected from the group consisting of potassium rosinate and sodium rosinate is more preferred. These emulsifiers can be used alone or in combination of two or more. The amount of emulsifier used is preferably 1.0 to 6.5 parts by mass with respect to 100 parts by mass of monomers.

In particular, the emulsifier used in emulsion polymerization preferably includes an anionic emulsifier, and more preferably resin acids, especially rosin acids. The use of rosin acids can prevent aggregation of rubber solids or pH fluctuations when blended with a base chloroprene-based polymer latex. Rosin acids include disproportionated rosin acids, conjugated resin acids, alkali metal salts of disproportionated rosin acids, alkali metal salts of conjugated resin acids, and the like.

In the producing method for the chloroprene-based polymer latex of an embodiment of the present invention, in addition to rosin acids, other commonly used emulsifiers and fatty acids can also be used. Other emulsifiers include, for example, preferably anionic emulsifiers, and in addition to the anionic emulsifiers described above, metal salts of aromatic sulfinic acid formalin condensates, sodium dodecylbenzenesulfonate, potassium dodecylbenzenesulfonate, sodium alkyldiphenyl ether sulfonate, potassium alkyldiphenyl ether sulfonate, sodium polyoxyethylene alkyl ether sulfonate, sodium polyoxypropylene alkyl ether sulfonate, potassium polyoxyethylene alkyl ether sulfonate, potassium polyoxypropylene alkyl ether sulfonate, and the like.

The content of anionic emulsifier other than rosin acid is preferably 0.2 to 1.0% by mass with respect to 100% by mass of the chloroprene-based polymer contained in the chloroprene-based polymer latex. Therefore, the amount of anionic emulsifier other than rosin acid charged before the start of emulsion polymerization is preferably within the range of 0.2 to 0.9 parts by mass, with respect to 100 parts by mass of monomers (for example, the total of chloroprene and 2,3-dichloro-1,3-butadiene).

The pH of the aqueous emulsion at the start of emulsion polymerization is preferably 10.5 to 13.5. Aqueous emulsion refers to a mixture solution of a chain transfer agent and monomers (chloroprene, 2,3-dichloro-1,3-butadiene, etc.) immediately before the start of emulsion polymerization, but it also includes cases where the composition changes by adding each component later or adding them in batches. When the pH of the aqueous emulsion at the start of emulsion polymerization is 10.5 or more, the polymerization reaction can be controlled more stably. When the pH is 13.5 or less, excessive increase in viscosity during polymerization is suppressed, and the polymerization reaction can be controlled more stably.

The polymerization temperature for emulsion polymerization is preferably within the range of 5 to 55°C. It is preferable that the temperature is 5°C or higher because the emulsion will not freeze, and if it is 55°C or lower, there will be no evaporation or boiling of the chloroprene monomer.

As the polymerization initiator, potassium persulfate, benzoyl peroxide, ammonium persulfate, hydrogen peroxide, etc. used in normal radical polymerization can be used.

The polymerization conversion rate is preferably in the range of 50 to 95%. The polymerization reaction is stopped by adding a polymerization terminator. When the polymerization conversion rate is 50% or more, the toluene-insoluble content tends to increase, and the strength of the obtained dip-molded coating tends to increase. It is also advantageous in terms of production costs. When the polymerization conversion rate is less than 95%, a decrease in polymerization reactivity due to a decrease in unreacted monomers can be avoided, and a decrease in productivity can also be avoided.

Examples of the polymerization terminator include diethylhydroxylamine, thiodiphenylamine, 4-tert-butylcatechol, 2,2'-methylenebis-4-methyl-6-tert-butylphenol, and the like. Unreacted monomers after emulsion polymerization can be removed by conventional methods such as vacuum distillation.

In addition, a freeze stabilizer, an emulsion stabilizer, a viscosity modifier, an antioxidant, a preservative or the like can be optionally added after polymerization to the chloroprene-based polymer latex obtained by the production method of an embodiment of the present invention, as long as the effect of the present invention is not impaired.

The method for producing the chloroprene-based polymer latex according to one embodiment of the present invention may further include a mixing step of mixing two or more types of chloroprene-based polymer latex with different weight average molecular weights after the polymerization step. In the mixing step, two or more types of chloroprene-based polymer latex can be mixed by a known method. In the mixing step, the chloroprene-based polymer latex may be obtained by, for example, stirring and mixing using a paddle blade at 30 to 300 rpm for 20 seconds to 3 minutes, and for example, at 100 rpm for 2 minutes.

2. Chloroprene-based Polymer Latex Composition

The chloroprene-based polymer latex composition of an embodiment of the present invention contains the chloroprene-based polymer latex containing the chloroprene-based polymer of the present invention. The chloroprene-based polymer latex composition of an embodiment of the present invention may contain, in addition to the chloroprene-based polymer latex, a metal oxide, an antioxidant, and other agents as required. The types and amounts of the metal oxides, the antioxidants, and other required agents that may be contained in the chloroprene-based polymer latex composition are described below as components that the dip-molded product may contain.

3. Method for Producing Chloroprene-based Polymer Latex

The method for producing the chloroprene-based polymer latex may include a raw material mixing step in which raw materials including the chloroprene-based polymer latex, the metal oxide, the antioxidant, and other necessary agents are mixed.

In the mixing step, an aqueous dispersion solution containing the metal oxide, the antioxidant, and other necessary agents can be prepared in advance, and the chloroprene-based polymer latex and the aqueous dispersion solution can be mixed.

The mixing step can be performed with a known mixing device such as a ball mill.

4. Dip-molded Product (Dip-molded Coating/Film)

The dip-molded product of an embodiment of the present invention is obtained using the above-mentioned chloroprene-based polymer latex composition. The dip-molded article of the embodiment can be made by dip-molding the aforementioned chloroprene-based polymer latex composition alone or after mixing it with other chloroprene-based polymer latex compositions. The dip-molded product of the present invention can be obtained by dip-molding a chloroprene-based polymer latex composition containing the chloroprene-based polymer latex by an immersion coagulation method, and then subjecting the dip-molded article to a heat-drying treatment at 150°C for 60 minutes. The dip-molded product of the present invention has sufficient tensile strength at break and an excellent texture. The dip-molded product can be suitably used as industrial/general household gloves, medical gloves, balloons, catheters, and boots.

The dip-molded product of the present invention may have components contained in the chloroprene-based polymer latex described above. The dip-molded product can contain chloroprene-based polymer as a base polymer. When the dip-molded product is 100% by mass, the chloroprene-based polymer can be contained 70% or more by mass, preferably 80% or more by mass, and more preferably 90% or more by mass. When the dip-molded product is 100% by mass, the content ratio of the chloroprene-based polymer in the dip-molded product can be, for example, 70, 75, 80, 85, 90, 95, 96, 97, 98, 99, or 100% by mass, and may be in the range between the two values exemplified herein.

The dip-molded product of the present invention may contain a metal oxide and an antioxidant. The dip-molded product of the present invention has sufficient tensile strength at break and an excellent texture, with or without the addition of a vulcanizing agent and a vulcanization accelerator. The chloroprene-based polymer latex composition of one embodiment of the present invention may not contain the vulcanizing agent or the vulcanization accelerator, and also may not contain sulfur or the vulcanization accelerator such as thiuram-based, dithiocarbamate-based, thiourea-based, guanidine-based, xanthogenate-based, and thiazole-based vulcanization accelerator. The following is a detailed description of the components that the dip-molded product of the present invention may contain.

4.1 Metal Oxide

The dip-molded product of the chloroprene-based polymer of the present invention can contain a metal oxide.

The metal oxide contained in the chloroprene-based polymer latex composition used to obtain the dip-molded product is not particularly limited, and examples thereof include zinc oxide, lead oxide, trilead tetroxide, magnesium oxide, aluminum oxide, iron oxide, beryllium oxide, and titanium oxide. Preferably, the metal oxide includes zinc oxide. Zinc oxide is generally said to function as a scavenger for the dechlorination atoms of chloroprene-based polymers. In addition, these metal oxides may be used alone or in combination of two or more.

The amount of the metal oxide added is preferably 0.5 to 15.0 parts by mass, with respect to 100 parts by mass of solid content of the chloroprene-based polymer latex contained in the chloroprene-based polymer latex composition used to obtain the dip-molded product. When the amount of the metal oxide added is 0.5 parts by mass or more, the tensile strength at break is expected to improve due to the crosslinking effect between the polymers. When the amount of the metal oxide added is 15.0 parts by mass or less, the dip-molded product with excellent flexibility can be obtained. Further, from the viewpoint of physical property balance between flexibility and tensile strength at break of the obtained dip-molded product, the amount of the metal oxide added is more preferably 0.5 to 5.0 parts by mass. The dip-molded product of the present invention may not contain the metal oxide.

4.2 Antioxidant

The dip-molded product of the chloroprene-based polymer of the present invention can also contain an antioxidant.

The antioxidant is not particularly limited, and phenolic antioxidants, amine antioxidants, heat-resistant oxidation (aging) antioxidants, ozone-resistant antioxidants, and the like can be used. When the obtained dip-molded product is used as a medical glove, a phenolic antioxidant can be used from the viewpoint of the color tone, texture, and hygiene of the dip-molded product. In particular, hindered phenol antioxidants have the above-mentioned effects. Examples of the hindered phenolic antioxidant include 2,2'-methylenebis(4-ethyl-6-t-butylphenol), 2,2'-methylenebis(4-methyl-6-t-butylphenol), 4,4'-butylidene(3-methyl-6-t-butylphenol), 4,4'-thiobis(3-methyl-6-t-butylphenol), butylated reaction product of p-cresol and dicyclopentadiene, 2,5'-di-t-butylhydroquinone, and 2,5'-di-t-amylhydroquinone. Among these, a butylated reaction product of p-cresol and dicyclopentadiene is preferred from the viewpoint of being generally dispersible in aqueous materials. Further, these compounds may be used alone or in combination of two or more.

The amount of the antioxidant added is preferably 0.5 to 10.0 parts by mass, with respect to 100 parts by mass of solid content of the chloroprene-based polymer latex contained in the chloroprene-based polymer latex composition used to obtain the dip-molded product. The amount of the antioxidant added is, for example, 1.0, 2.0, 3.0, 4.0, 5.0, 6.0, 7.0, 8.0, 9.0, or 10.0 parts by mass, and may be in the range between the two values exemplified herein. When the amount of the antioxidant added is 0.5 parts by mass or more, the effect of suppressing color tone change of the dip-molded product can be obtained. When the amount of the antioxidant added is 10.0 parts by mass or less, the stability of the chloroprene-based polymer latex composition is ensured. Further, from the viewpoint of physical property balance between flexibility and tensile strength at break of the obtained dip-molded product, the amount of the antioxidant added is more preferably 0.5 to 5.0 parts by mass. The dip-molded product of the present invention may not contain the antioxidant.

4.3 Vulcanizing Agent and Vulcanization Accelerator

The dip-molded product of the chloroprene-based polymer of one embodiment of the present invention can also contain a vulcanizing agent and/or a vulcanization accelerator. In addition, the chloroprene-based polymer latex composition used to obtain the dip-molded product may not contain sulfur and the vulcanization accelerator such as thiuram-based, dithiocarbamate-based, thiourea-based, guanidine-based, xanthate-based, thiazole-based vulcanization accelerator. In other words, the dip-molded product of the chloroprene-based polymer latex composition includes those that contain a vulcanizing agent but do not contain a vulcanization accelerator, those that do not contain a vulcanizing agent but contain a vulcanization accelerator, those that contain a vulcanizing agent and a vulcanization accelerator, and those that do not contain a vulcanizing agent and a vulcanization accelerator. Whether or not to incorporate a vulcanizing agent and a vulcanization accelerator may be determined depending on the intended dip-molded product.

Examples of the vulcanizing agent include, but are not limited to, sulfur and the like. The amount of the vulcanizing agent added can be 0 to 10.0 parts by mass, with respect to 100 parts by mass of solid content of the chloroprene-based polymer latex contained in the chloroprene-based polymer latex composition. The amount of the vulcanizing agent added is, for example, 0, 1.0, 2.0, 3.0, 4.0, 5.0, 6.0, 7.0, 8.0, 9.0, or 10.0 parts by mass, and may be in the range between the two values exemplified herein.

A vulcanization accelerator is an agent that is added during the vulcanization of raw rubber for the purpose of interacting with the vulcanizing agent to increase the vulcanization rate, shorten the vulcanization time, lower the vulcanization temperature, reduce the amount of vulcanizing agent, and improve the physical properties of the vulcanized rubber, and usually refers to an agent that accelerates the sulfur vulcanization reaction.

Examples of the vulcanization accelerator commonly used for vulcanization of the chloroprene-based polymer latex include, but are not limited to, thiuram-based, dithiocarbamate-based, thiourea-based, guanidine-based, xanthate-based, thiazole-based vulcanization accelerators, and the like. These may be used alone or in combination of two or more as required.

Examples of the thiuram-based vulcanization accelerator include tetramethylthiuram disulfide, tetraethylthiuram disulfide, tetrabutylthiuram disulfide, tetrakis(2-ethylhexyl) thiuram disulfide, tetramethylthiuram monosulfide, dipentamethylenethiuram tetrasulfide, and the like.

Examples of the dithiocarbamate-based vulcanization accelerator include sodium dibutyldithiocarbamate, zinc dimethyldithiocarbamate, zinc diethyldithiocarbamate, zinc N-ethyl-N-phenyldithiocarbamate, zinc N-pentamethylenedithiocarbamate, copper dimethyldithiocarbamate, ferric dimethyldithiocarbamate, tellurium diethyldithiocarbamate, and the like, and zinc dibutyldithiocarbamate is particularly preferably used.

Examples of the thiourea-based vulcanization accelerator include ethylenethiourea, N,N'-diethylthiourea, trimethylthiourea, N,N'-diphenylthiourea, and the like.

Examples of the guanidine-based vulcanization accelerator include 1,3-diphenylguanidine, 1,3-di-o-tolylguanidine, 1-o-tolylbiguanide, di-o-tolylguanidine salt of dicatechol borate, and the like.

Examples of the xanthate-based vulcanization accelerator include zinc butylxanthate, zinc isopropylxanthate, and the like.

Examples of the thiazole-based vulcanization accelerator include 2-mercaptobenzothiazole, di-2-benzothiazolyl disulfide, 2-mercaptobenzothiazole zinc salt, cyclohexylamine salt of 2-mercaptobenzothiazole, 2-(4'-morpholinodithio) benzothiazole, and the like.

The amount of the vulcanization accelerator added can be 0 to 5.0 parts by mass, with respect to 100 parts by mass of solid content of the chloroprene-based polymer latex contained in the chloroprene-based polymer latex composition. The amount of the vulcanization accelerator added is, for example, 0, 0.5, 1.0, 1.5, 2.0, 2.5, 3.0, 3.5, 4.0, 4.5, or 5.0, and may be in the range between the two values exemplified herein.

4.4 Shape of Dip-molded Product

The thickness (for example, minimum thickness) of the dip-molded product may be 0.01 to 0.50 mm. The thickness of the dip-molded product is, for example, 0.01, 0.05, 0.10, 0.20, 0.30, 0.40, or 0.50 mm, and may be in the range between the two values exemplified herein. The thickness of the dip-molded product can be adjusted by the time for which the mold is immersed in the polymer latex composition, the solid content concentration of the chloroprene-based polymer latex composition, and the like. If it is desired to reduce the thickness of the dip-molded product, the immersion time may be shortened or the solid content concentration of the chloroprene-based polymer latex composition may be reduced.

4.5 Apparent Hardness of Dip-molded Product

The dip-molded product of an embodiment of the present invention preferably has the apparent hardness of a $0.60\pm0.10$ mm-thick dip-molded film containing the chloroprene-based polymer latex, which is measured at 23°C using a Wallace micro automatic hardness tester, of 25.0 IRHD or more and 40.0 IRHD or less. Here, the $0.60\pm0.10$ mm-thick dip-molded film can be a laminate of multiple 0.15 to 0.25 mm-thick dip-molded films. The apparent hardness of the dip-molded film is, more preferably, 37.0 IRHD or less. If this hardness value is 40.0 IRHD or less, the dip-molded film has excellent texture and feel, and also sufficient tensile strength at break. The apparent hardness of the dip-molded product of an embodiment of the present invention is, for example, 25.0, 27.0, 28.0, 29.0, 30.0, 31.0, 32.0, 33.0, 34.0, 35.0, 36.0, 37.0, 38.0, 39.0, or 40.0 IRHD, and may be in the range between the two values exemplified herein. The apparent hardness of the dip-molded product can be controlled by adjusting the type and amount of raw materials blended and polymerization conditions during the production of the chloroprene-based polymer latex, and by adjusting the type (weight average molecular weight, type and content of monomer units contained, and the like), amount and the like of the chloroprene-based polymer contained in the chloroprene-based polymer latex.

In this measurement, samples having the shape described above are used, and for other conditions, the International Rubber Hardness IRHD measured in accordance with JIS K 6253-2 is taken as the apparent hardness. The hardness measured by the above method based on JIS K 6253-1 is referred to as the "apparent hardness". The method for producing the dip-molded product, and the measurement method of the "apparent hardness" of the International Rubber Hardness IRHD can be as described in the Examples.

4.6 Tensile Strength at Break of Dip-molded Product

The dip-molded product of an embodiment of the present invention may have the tensile strength at break of 16.0 MPa or higher, and preferably 17.0 MPa or higher. The tensile strength at break is, for example, 16.0, 17.0, 18.0, 19.0, 20.0, 21.0, 22.0, 23.0, 24.0, 25.0, 26.0, 27.0, 28.0, 29.0, or 30.0 MPa, and may be in the range between the two values exemplified herein. Here, the tensile strength at break of the dip-molded product is the tensile strength at break measured in accordance with JIS K 6251:2017.

As described above, the dip-molded product of an embodiment of the present invention can have excellent texture, and sufficient tensile strength at break regardless of the addition of vulcanizing agents, vulcanization accelerators, or cross-linking agents.

Conventional latex containing chloroprene rubber has been used as a raw material for rubber latex in dip-molded product coatings such as gloves, balloons, boots, and catheters and the like. On the other hand, especially in medical rubber glove applications, there is a tendency to demand high flexibility similar to dip-molded products obtained by using natural rubber or polyisoprene, and a dip-molded product of chloroprene-based polymer with improved texture of the dip-molded product (film) is desired.

As described above, the dip-molded product of an embodiment of the present invention has flexibility, sufficient tensile strength at break and sufficiently excellent texture even without containing sulfur or the vulcanization accelerator having hygienic concerns.

The dip-molded product obtained from the chloroprene-based polymer latex of the embodiment may contain sulfur or the vulcanization accelerator. However, the above dip-molded product has a texture as good as or better than that of vulcanized dip-molded products obtained from conventional chloroprene-based polymer latex, even without sulfur and the vulcanization accelerators. For this reason, the chloroprene-based polymer latex of the embodiment is suitably used as a raw material for the dip-molded products (dip-molded film).

5. Method for Producing Dip-molded Product

The method for producing the dip-molded product containing the chloroprene-based polymer of the present invention may include the following steps:

A molding step in which the chloroprene-based polymer latex composition containing the chloroprene-based polymer described above is formed using a calcium-based coagulant by an immersion coagulation method to obtain the dip-molded article, and

A drying step in which the obtained dip-molded article is subjected to a heat-drying treatment to obtain the dip-molded product.

The molding method for producing the dip-molded article according to an embodiment of the present invention is not particularly limited, and may be molded according to a conventional method. Examples of the molding method include an immersion coagulation method, a simple immersion method, a heat-sensitive immersion method, an electrodeposition method, etc. The immersion coagulation method can be used from the viewpoint of easy production and easily obtaining a dip-molded article with a constant thickness. Specifically, a mold die made of ceramics coated with a calcium-based coagulating liquid is immersed in the chloroprene-based polymer latex composition, and the chloroprene-based polymer latex composition is coagulated. Then, after water-soluble impurities are removed by leaching, it is dried, and further heated and vulcanized to form a dip-molded product film (rubber coating), and then the dip-molded product film is released from the mold. Thereby, a film-like dip-molded article can be obtained.

The method for producing the dip-molded product of an embodiment of the present invention may include a step of subjecting the obtained dip-molded article to a heat-drying treatment to vulcanize the unvulcanized dip-molded article. The heat drying temperature may be appropriately set according to the composition of the chloroprene-based polymer latex composition, and may be 100 to 220°C or 120 to 150°C. The heat drying temperature may be, for example, 100, 110, 120, 130, 140, 150, 160, 170, 180, 190, 200, 210, or 220°C, and may be in the range between the two values exemplified herein. The heat drying time may be appropriately set according to the composition of the chloroprene-based polymer latex composition, or the shape of the unvulcanized molded article, or the like, and may be 10 to 300 minutes. The heat drying time may be, for example, 10, 20, 30, 40, 50, 60, 70, 80, 90, 100, 110, 120, 130, 140, 150, 160, 170, 180, 190, 200, 210, 220, 230, 240, 250, 260, 270, 280, 290, or 300 minu tes, and may be in the range between the two values exemplified herein. As an example, the dip-molde d product of an embodiment of the present invention may be subjected to a heat drying treatment at 15 0°C for 60 minutes.

Examples

Hereinafter, the present invention will be explained in more detail based on Examples and Comparative Examples, but the present invention is not limited to these Examples. In the following examples related to the synthesis of chloroprene-based polymer latex, unless otherwise specified, "part by mass" is the amount relative to total 100 parts by mass of chloroprene monomer and 2,3-dichloro-1,3-butadiene monomer before the start of emulsion polymerization. In addition, "% by mass" is the amount relative to 100% by mass of the chloroprene-based polymer contained in the chloroprene-based polymer latex.

[Synthesis Example A1]

<Preparation of chloroprene-based polymer latex>

In a polymerization vessel with an internal volume of 40 liters, 91 parts by mass of chloroprene monomer, 9 parts by mass of 2,3-dichloro-1,3-butadiene monomer, 0.02 parts by mass of n-dodecylmercaptan, 76.5 parts by mass of pure water, 18 parts by mass of gum rosin-based disproportionated potassium rosinate (aqueous solution, 25% solids content) (product name "RONJIS K-25", manufactured by Arakawa Chemical Industry Co.), 0.80 parts by mass of potassium hydroxide, and 0.50 parts by mass of sodium salt of β-naphthalenesulfbnic acid formalin condensate (product name "Demol N", manufactured by Kao Corporation) were added. The pH of the aqueous emulsion before the start of polymerization was 13.2. As a polymerization initiator, 0.1 parts by mass of potassium persulfate was added, and polymerization was carried out at a polymerization temperature of 15°C under a nitrogen flow. When the polymerization conversion rate reached 83%, 0.01 parts by mass of diethylhydroxylamine was added as a polymerization terminator to stop the polymerization, and a latex was obtained.
The latex was distilled under reduced pressure to remove unreacted monomers and some water to obtain a chloroprene-based polymer latex with a solid content of 60%.

[Synthesis Examples of A2 to A5]

Chloroprene-based polymer latex samples of Synthesis Examples A2 to A5 were prepared in the same manner as in Synthesis Example A1, except that the charging amounts of 2,3-dichlsoro-1,3-butadiene and n-dodecylmercaptan as a chain transfer agent, the polymerization temperature, and the polymerization conversion rate were changed as shown in Table 1 below.

[Synthesis Example B1]

<Preparation of chloroprene-based polymer latex>

In a polymerization vessel with an internal volume of 40 liters, 91 parts by mass of chloroprene monomer, 9 parts by mass of 2,3-dichloro-1,3-butadiene monomer, 3.0 parts by mass of n-dodecylmercaptan, 76.5 parts by mass of pure water, 18 parts by mass of gum rosin-based disproportionated potassium rosinate (aqueous solution, 25% of solid content) (product name "RONJIS K-25", manufactured by Arakawa Chemical Industry Co.), 0.80 parts by mass of potassium hydroxide, and 0.50 parts by mass of sodium salt of β-naphthalenesulfbnic acid formalin condensate (product name "Demol N", manufactured by Kao Corporation) were added. The pH of the aqueous emulsion before the start of polymerization was 13.1. As a polymerization initiator, 0.1 parts by mass of potassium persulfate was added, and polymerization was carried out at a polymerization temperature of 30°C under a nitrogen flow. When the polymerization conversion rate reached 83%, 0.01 parts by mass of diethylhydroxylamine was added as a polymerization terminator to stop the polymerization, and a latex was obtained.
The latex was distilled under reduced pressure to remove unreacted monomers to obtain a chloroprene-based polymer latex with a solid content of 60%.

[Synthesis Examples B2 to B8]

Chloroprene-based polymer latex samples of Synthesis Examples B2 to B8 were prepared in the same manner as in Synthesis Example B1, except that the charging amounts of 2,3-dichlsoro-1,3-butadiene and n-dodecylmercaptan as a chain transfer agent, the polymerization temperature, and the polymerization conversion rate were changed as shown in Table 1 below.

The latex was distilled under reduced pressure to remove unreacted monomers to obtain a chloroprene-based polymer latex with a solid content of 60%.

The obtained chloroprene-based polymer latex was subjected to the following analyses. The results are shown in Table 1.

<Weight average molecular weight measurement of each chloroprene-based polymer latex>

The obtained chloroprene-based polymer latex was freeze-dried, dissolved in tetrahydrofuran, and the weight average molecular weight of the eluted portion (sol portion) was measured by gel permeation chromatography (GPC). The detected peak can be obtained as the weight average molecular weight in polystyrene equivalent, and was measured under the conditions described below.

<Weight average molecular weight measurement by gel permeation chromatography>

GPC measurements were performed under the following conditions. The weight average molecular weight was calculated based on polystyrene equivalent.

- Gel permeation chromatography (GPC) measuring device: gel permeation chromatograph (HLC-8320) manufactured by Tosoh Corporation
- Column: TSKgel ALPHA-M manufactured by Tosoh Corporation
- Eluent: tetrahydrofuran (manufactured by Kanto Chemical Co., Inc.)
- Eluent flow rate: 1.0ml/min
- Column temperature: 40°C
- Detection method: Differential refractive index (RI) meter
- Calibration curve: created using standard polystyrene

<Measurement of copolymerization amount of 2,3-dichloro-1,3-butadiene>

The obtained chloroprene-based polymer latex was freeze-dried to obtain a rubber sample of the chloroprene-based polymer, which was then cut into a test piece of 0.05 mg, and measured by pyrolysis gas chromatography to determine the area ratio of the peak derived from chloroprene with respect to the peak derived from 2,3-dichloro-1,3-butadiene. Using a calibration curve of the area ratio of the peak derived from chloroprene with respect to the peak derived from 2,3-dichloro-1,3-butadiene and the 2,3-dichloro-1,3-butadiene content, the content (% by mass) of 2,3-dichloro-1,3-butadiene monomer units in the chloroprene-based polymer was determined.

<Measurement of pyrolysis gas chromatography>

The measurement conditions for the pyrolysis gas chromatography are as follows:

Instrument name: HP5890-II
Column: DB-5 0.25mm$\varphi$ × 30m (film thickness 1.0$\mu$m)
Column temperature: 50°C (5min) -> 10°C/min -> 150°C -> 25°C/min -> 300°C
Injection port temperature: 250°C
Detector temperature: 280°C
Detector: FID

<Measurement of toluene-insoluble content in chloroprene-based polymer latex>

The obtained chloroprene-based polymer latex was freeze-dried to obtain a solid (chloroprene-based polymer rubber) of 1g, which was cut into 2 mm squares and dissolved in toluene for 16 hours in a conical beaker. The mixture was then centrifuged, and the gel content was separated using a 200 mesh wire net, and the dried mass was measured. The toluene-insoluble content was calculated using the following formula:

(Mass of the solid obtained by separating and drying the gel content)/(Mass of the solid obtained by freeze-drying the chloroprene-based polymer latex) × 100

Table 1

| Table 1 | | | Synthesis Examples | | | | | | | | | | | | |
|---|---|---|---|---|---|---|---|---|---|---|---|---|---|---|---|
| | | | A1 | A2 | A3 | A4 | A5 | 81 | B2 | 83 | 84 | B5 | B6 | B7 | B8 |
| Polymerization recipe | Chloroprene | parts by mass | 91 | 100 | 80 | 90 | 100 | 91 | 91 | 91 | 100 | 91 | 91 | 90 | 100 |
| | 2.3-dichloro-1,3-butadiene | parts by mass | 9 | 0 | 20 | 10 | 0 | 9 | 9 | 9 | 0 | 9 | 9 | 10 | 0 |
| | n-dodecytmercaptan | parts by mass | 0.02 | 0.02 | 0.03 | 007 | 0.05 | 3.0 | 20 | 8.0 | 2.8 | 13.0 | 0.8 | 0.31 | 0.25 |
| Polymerization conditions | Polymerization temperature | °C | 15 | 35 | 25 | 40 | 40 | 30 | 40 | 20 | 20 | 35 | 40 | 40 | 40 |
| | Polymerization conversion rate | % | 83 | 90 | 86 | 90 | 90 | 83 | 88 | as | 85 | 78 | 90 | 90 | 90 |
| Chloroprene-based polymer latex | Weight average molecular weight | g/mol | 800.000 | 802.000 | ※ | ※ | ※ | 22.715 | 33.628 | 8.680 | 19.632 | 4.150 | 68.560 | 380.000 | 290.000 |
| | Copolymerization amount of 2,3-dichloro-1,3-butadiene | % by mass | 9.5 | - | 21.1 | 10.2 | - | 9.6 | 9.3 | 9.4 | - | 10.1 | 9.3 | 10.3 | - |
| | toluene-insoluble content | % by mass | 838 | 89.3 | 85.2 | 75.0 | 87.0 | 12 | 1.9 | 0.8 | 1.8 | 1.1 | 152 | 0.5 | 2.0 |

❖ In the molecular weight distribution obtained by gel permeation chromatography. no peak was observed with a weight average molecular weight between 3.000 and 80.000.

EP 4 495 180 A1

[Example 1]

When the total of the chloroprene-based polymer latex of Synthesis Example A1 and the chloroprene-based polymer latex of Synthesis Example B1 was 100 parts by mass, 80 parts by mass of the sample of Synthesis Example A1 and 20 parts by mass of the sample of Synthesis Example B1 were mixed by stirring using a paddle blade at 100 rpm for 2 minutes, thereby obtaining the chloroprene-based polymer latex of Example 1.

<Weight average molecular weight measurement of chloroprene-based polymer latex>

The obtained chloroprene-based polymer latex was freeze-dried, dissolved in tetrahydrofuran, and the gel permeation chromatography (GPC) measurement was performed for the soluble portion. As a result, a peak with a weight average molecular weight (Mw) of 22,715 was confirmed. The GPC measurement conditions were the same as those for the weight average molecular weight measurement in each of the above synthesis examples.

< Copolymerization amount of 2,3-dichloro-1,3-butadiene contained in chloroprene-based polymer latex >

The mixed chloroprene-based polymer latex was freeze-dried to measure the copolymerization amount of 2,3-dichloro-1,3-butadiene (content of 2,3-dichloro-1,3-butadiene monomer unit) of the chloroprene-based polymer rubber, which was 9.5% by mass. From this analytical value, it was confirmed that the copolymerization amount of 2,3-dichloro-1,3-butadiene in the chloroprene-based polymer in the mixed latex is roughly consistent with the value calculated from the copolymerization amount (analytical value) of 2,3-dichloro-1,3-butadiene in each latex and the mixing ratio of each chloroprene-based polymer latex in the mixed latex, and further shows a rough correlation with the value calculated from the charged amount of 2,3-dichloro-1,3-butadiene in each latex and the mixing ratio of each chloroprene-based polymer latex in the mixed latex. The conditions of this measurement were the same as those of the pyrolysis gas chromatography measurement in each Synthetic Examples described above.

< Measurement of toluene-insoluble content of chloroprene-based polymer latex >

The toluene-insoluble content of the freeze-dried solid content (chloroprene-based polymer rubber) of the mixed chloroprene-based polymer latex was measured, and the result was 67% by mass. From this analyzed value, it was confirmed that the toluene-insoluble content of the chloroprene-based polymer latex roughly correlates with the value calculated from the toluene-insoluble content and the mixing ratio of each chloroprene-based polymer latex to be mixed.

<Preparation of dip-molded product (dip-molded film sample)>

(Preparation of chloroprene-based polymer latex composition)

A chloroprene-based polymer latex composition was prepared by mixing 100 parts by mass of solids of the chloroprene-based polymer latex with an aqueous dispersion, and adding water to adjust the total solids concentration of the blend to 30% by mass. The aqueous dispersion was prepared by mixing 2 parts by mass of Type 2 zinc oxide, 2 parts by mass of a butylated reaction product of p-cresol and dicyclopentadiene (product name "Nocrac PBK", manufactured by Ouchi Shinko Chemical Industry Co., Ltd.), 2 parts by mass of dibutyldithiocarbamate (product name "Noccela BZ", manufactured by Ouchi Shinko Chemical Industry Co., Ltd.), 1 part by mass of sulfur, 0.1 part by mass of sodium salt of β-naphthalenesulfbnic acid formalin condensate (product name "Demol N", manufactured by Kao Corporation) and 10.7 parts by mass of water at 20°C for 16 hours using a ceramic ball mill. The obtained chloroprene-based polymer latex composition contains, relative to 100 parts by mass of the solid content of the chloroprene-based polymer latex, 2 parts by mass of Type 2 zinc oxide, 2 parts by mass of a butylated reaction product of p-cresol and dicyclopentadiene (product name "Nocrac PBK", manufactured by Ouchi Shinko Chemical Industry Co., Ltd.), 2 parts by mass of dibutyldithiocarbamic acid (product name "Noccela BZ", manufactured by Ouchi Shinko Chemical Industry Co., Ltd.), 1 part by mass of sulfur, 0.1 part by mass of a sodium salt of β-naphthalenesulfonic acid formalin condensate (product name "Demol N", manufactured by Kao Corporation), and water.

(Preparation of dip-molded film)

A ceramic cylinder with an outer diameter of 50 mm and a length of 300 mm (manufactured by Shinko Co., Ltd.) was immersed for 1 second in a coagulation liquid containing 62 parts by mass of water, 35 parts by mass of calcium nitrate tetrahydrate, and 3 parts by mass of calcium carbonate, and then removed. After drying for 3 minutes, the mold was immersed for 2 minutes in the chloroprene-based polymer latex composition without sulfur and vulcanization accelerator prepared by the above-mentioned procedure. The mold was then washed with running water at 45°C. for 1 minute and dried at 150°C. for 60 minutes to prepare a dip-molded product (dip-molded film) for evaluation.

<Evaluation of dip-molded product>

(Film thickness)

The thickness (film thickness) of the film for evaluation was measured at three points in the center of the film using a test piece thickness gauge (manufactured by Kobunshi Keiki Co., Ltd., product name: ASKER SDA-12), and the minimum thickness was obtained as the thickness of the film for evaluation.

(Measurement of International Rubber Hardness IRHD)

The dip-molded product of the chloroprene-based polymer having a film thickness of 0.20 mm was stacked by three to obtain a film thickness of 0.60 mm, and the IRHD hardness was measured using a Wallace micro automatic hardness tester under an environment of 23°C, and the result was 31.6 IRHD. The number of films to be stacked during the measurement may be changed each time depending on the film thickness of the obtained dip-molded product, as long as the total thickness is $0.60 \pm 0.10$ mm. The thickness of the dip-molded film can be adjusted to 0.15 to 0.25 mm. Alternatively, the dip-molded films having the above thickness can be stacked by three or four to obtain the dip-molded film having a total thickness of $0.60 \pm 0.10$ mm, which can be used for measurement. The results are shown in Tables 2 and 3.

<Evaluation of texture of dip-molded product>

Five subjects were asked to touch the obtained dip-molded product and evaluate the texture of the dip-molded product by touching the surface condition, and by stretching and folding it. Evaluation was performed according to the following criteria, and the average of each subject's evaluation was rounded to the nearest value.

(Texture evaluation criteria)

3: Extremely soft and pleasant to the touch, with excellent texture
2: Soft, with no practical issues to the touch, with good texture
1: Not very soft, felt a bit hard to the touch, with poor texture

(Tensile strength at break)

Using the dip-molded film, the tensile strength at break was measured in accordance with JIS K 6251. The results are shown in Tables 2 and 3.

[Examples 2 to 12, Comparative Examples 1 to 5]

The dip-molded products were prepared in the same manner as in Example 1, except that the formulation of the chloroprene-based polymer latex composition was set under the conditions shown in Tables 2 and 3 below, and the dip-molded film samples were produced and evaluated. In Examples 2, 3, 4, 5 and 8, 9, 10, and Comparative Examples 2, 3, and 4, the chloroprene-based polymer latexes with different weight average molecular weight peaks detected and/or different 2,3-dichloro-1,3-butadiene copolymerization amounts were used. In Examples 6, 7 and Comparative Examples 1 and 5, the mixing ratio of each chloroprene-based polymer latex was changed. In Example 11, zinc oxide as the metal oxide and the antioxidant were excluded from the chloroprene-based polymer latex composition used to obtain the dip-molded product of the chloroprene-based polymer latex.

In Example 12, dibutyl dithiocarbamic acid as the vulcanization accelerator and sulfur as the vulcanizing agent were added to the chloroprene-based polymer latex composition used to obtain the dip-molded product of the chloroprene-based polymer latex.

Table 2

| Table 2 | | | | Examples | | | | | | | | | | | | | | | | | | | | | | | |
|---|---|---|---|---|---|---|---|---|---|---|---|---|---|---|---|---|---|---|---|---|---|---|---|---|---|---|---|
| | | | | 1 | | 2 | | 3 | | 4 | | 5 | | 6 | | 7 | | 8 | | 9 | | 10 | | 11 | | 12 | |
| | Synthetic Examples | | | A1 | B1 | A1 | B2 | A1 | B3 | A1 | B4 | A2 | B1 | A1 | B1 | A1 | B1 | A1 | B5 | A1 | B6 | A3 | B1 | A1 | B1 | A1 | B1 |
| Chloroprene-based polymer latex | Mixing ratio of each latex | | % by mass | 80 | 20 | 80 | 20 | 80 | 20 | 80 | 20 | 80 | 20 | 90 | 10 | 65 | 35 | 80 | 20 | 80 | 20 | 80 | 20 | 80 | 20 | 80 | 20 |
| | Peak with a weight average molecular weight of 3,000 to 80,000 | | g/mol | 22,715 | | 33,628 | | 8,680 | | 19,632 | | 22,715 | | 22,715 | | 22,715 | | 4,150 | | 68,560 | | 22,715 | | 22,715 | | 22,715 | |
| | Copolymerization amount of 2,3-dichloro-1,3-butadiene | | % by mass | 9.5 | | 9.4 | | 9.4 | | 7.6 | | 1.9 | | 9.5 | | 9.5 | | 9.6 | | 9.4 | | 18.8 | | 9.5 | | 9.5 | |
| | toluene-insoluble content | | % by mass | 67 | | 66 | | 67 | | 67 | | 71 | | 81 | | 58 | | 67 | | 70 | | 68 | | 67 | | 67 | |
| Formulation of chloroprene-based polymer latex composition | Chloroprene-based polymer | | parts by mass | 100 | | 100 | | 100 | | 100 | | 100 | | 100 | | 100 | | 100 | | 100 | | 100 | | 100 | | 100 | |
| | Metal oxide | Type 2 zinc oxide | parts by mass | 2.0 | | 2.0 | | 2.0 | | 2.0 | | 2.0 | | 2.0 | | 2.0 | | 2.0 | | 2.0 | | 2.0 | | – | | 2.0 | |
| | Antioxidant | Nocrac PBK | parts by mass | 2.0 | | 2.0 | | 2.0 | | 2.0 | | 2.0 | | 2.0 | | 2.0 | | 2.0 | | 2.0 | | 2.0 | | – | | 2.0 | |
| | Vulcanizing agent | sulfur | parts by mass | – | | – | | – | | – | | – | | – | | – | | – | | – | | – | | – | | 1.0 | |
| | Vulcanization accelerator | Noccela BZ | parts by mass | – | | – | | – | | – | | – | | – | | – | | – | | – | | – | | – | | 2.0 | |
| Dip-molded film containing the chloroprene-based polymer latex | Film thickness | | mm | 0.20 | | 0.19 | | 0.19 | | 0.20 | | 0.19 | | 0.19 | | 0.19 | | 0.20 | | 0.19 | | 0.20 | | 0.20 | | 0.20 | |
| | Apparent hardness | | IRHD | 31.6 | | 34.2 | | 27.5 | | 35.6 | | 38.2 | | 35.1 | | 27.7 | | 26.8 | | 37.5 | | 32.5 | | 30.1 | | 35.6 | |
| | Film texture | | | 3 | | 3 | | 3 | | 3 | | 2 | | 3 | | 3 | | 3 | | 2 | | 3 | | 3 | | 3 | |
| | Tensile strength at break | | MPa | 18.8 | | 19.3 | | 17.7 | | 18.1 | | 20.3 | | 19.9 | | 16.4 | | 17.2 | | 19.8 | | 18.6 | | 17.8 | | 20.8 | |

Table 3

| | | | Comparative Examples | | | | | | | | | |
|---|---|---|---|---|---|---|---|---|---|---|---|---|
| Table 3 | | | Comparative Example 1 | | Comparative Example 2 | | Comparative Example 3 | | Comparative Example 4 | | Comparative Example 5 | |
| Chloroprene-based poly-mer latex | Synthetic Examples | | A1 | - | A3 | B4 | A4 | B7 | A5 | B8 | A1 | B1 |
| | Mixing ratio of each latex | % by mass | 100 | - | 80 | 20 | 70 | 30 | 50 | 50 | 30 | 70 |
| | Peak with a weight average molecular weight of 3,000 to 80,000 | g/mol | - | | 19,632 | | - | | - | | 22,715 | |
| | Copolymerization amount of 2,3-dichloro-1,3-butadiene | % by mass | 9.5 | | - | | 10.2 | | - | | 9.5 | |
| | toluene-insoluble content | %6 by mass | 84 | | 69 | | 21 | | 45 | | 24 | |
| Formulation of chloroprone-based polymer latex composition | Chloroprene-based polymer | | parts by mass | 100 | | 140 | | 100 | | 100 | | 100 | |
| | Metal oxide | Type 2 zinc oxide | parts by mass | 2.0 | | 2.0 | | 2.0 | | 2.0 | | 2.0 | |
| | Antioxidant | Nocrac PBK | parts by mass | 2.0 | | 2.0 | | 2.0 | | 2.0 | | 2.0 | |
| | Vulcanizing agent | sulfur | parts by mass | - | | - | | - | | - | | - | |
| | Vulcanization accelerator | Noccela BZ | parts by mass | - | | - | | - | | - | | - | |

(continued)

| Table 3 | | | Comparative Examples | | | | |
|---|---|---|---|---|---|---|---|
| | | | Comparative Example 1 | Comparative Example 2 | Comparative Example 3 | Comparative Example 4 | Comparative Example 5 |
| Dip-molded film containing the chloroprene-based polymer latex | Film thickness | mm | 0.20 | 0.19 | 0.20 | 0.18 | - |
| | Apparent hardness | IRHD | 41.2 | 44.4 | 40.8 | 48.7 | - |
| | Film texture | | 1 | 1 | 1 | 1 | - |
| | Tensile strength at break | MPa | 23.6 | 21.3 | 21.9 | 18.2 | - |

As is clear from above Tables 1 to 3, the dip-molded products (dip-molded films) obtained by using the chloroprene-based polymer latex compositions of the present invention in Examples 1 to 12 had low apparent hardness values in the International Rubber Hardness Scale, and had excellent texture when made into the dip-molded products (dip-molded films), and also had sufficient tensile strength at break.

In Comparative Example 1, the chloroprene-based polymer latex did not contain the chloroprene-based polymer with low weight average molecular weight, and had high toluene-insoluble content, i.e., very high gel content and high apparent hardness value. As a result, the texture of the obtained dip-molded product deteriorated.

In Comparative Example 2, the chloroprene-based polymer latex was not copolymerized with 2,3-dichloro-1,3-butadiene, which is considered to have strongly affected the crystallinity and increased the apparent hardness value. As a result, the texture of the obtained dip-molded product deteriorated.

In Comparative Example 3, the chloroprene-based polymer latex did not contain the chloroprene-based polymer with low weight average molecular weight, and had high apparent hardness. As a result, the texture deteriorated.

In Comparative Example 4, the chloroprene-based polymer latex did not contain the chloroprene-based polymer with low weight average molecular weight, and also 2,3-dichloro-1,3-butadiene was not copolymerized, which is considered to have strongly affected the crystallinity and increased the apparent hardness value. As a result, the texture deteriorated.

In Comparative Example 5, only low molecular weight chloroprene-based polymer existed in the chloroprene-based polymer latex, which made the latex very sticky during molding and the dip-molded product could not be obtained.

Example 12 shows that, by using the chloroprene-based polymer latex having the apparent hardness of the dip-molded film containing the chloroprene-based polymer latex not more than a specific value, the dip-molded product having sufficient tensile strength at break and excellent texture can be obtained even if the vulcanization accelerator or sulfur is contained. That is, the chloroprene-based polymer latex composition and the dip-molded product of an embodiment of the present invention may contain sulfur or the vulcanization accelerator.

Also, from Examples 2, 3 and Examples 8, 9 using Synthetic Examples B2, B3 and B5, B6, it is found that the weight average molecular weight in the low molecular weight region has an effect on the apparent hardness, and the higher the weight average molecular weight, the higher the hardness value tends to be. From the above, it was confirmed that the apparent hardness of the dip-molded film containing the chloroprene-based polymer latex of the present invention can be controlled by appropriately adjusting the weight average molecular weight of each chloroprene-based polymer, the type and amount of monomer unit contained in the chloroprene-based polymer, and the mixing ratio of each chloroprene-based polymer, contained in the chloroprene-based polymer latex, and that by adjusting the apparent hardness of the dip-molded film containing the chloroprene-based polymer latex, the dip-molded product having excellent texture can be obtained.

## Claims

1.   A chloroprene-based polymer latex comprising a chloroprene-based polymer, wherein:

apparent hardness of a 0.60±0.10 mm-thick dip-molded film containing the chloroprene-based polymer latex, measured at 23°C using a Wallace micro automatic hardness tester, is 25.0 IRHD or more and 40.0 IRHD or less, the 0.60±0.10 mm-thick dip-molded film is a laminate of multiple 0.15 to 0.25 mm-thick dip-molded films, the 0.15 to 0.25 mm-thick dip-molded film is obtained by immersing a ceramic mold to which a calcium-based coagulation liquid has been applied in a chloroprene-based polymer latex composition containing the chloroprene-based polymer latex by an immersion coagulation method, and then subjecting the dip-molded film to a heat-drying treatment at 150°C for 60 minutes.

2.   The chloroprene-based polymer latex of Claim 1, wherein when the chloroprene-based polymer latex is freeze-dried, dissolved in tetrahydrofuran, and a soluble portion is measured by gel permeation chromatography, at least a peak with a weight average molecular weight of 3,000 to 80,000 is detected.

3.   The chloroprene-based polymer latex of Claim 1 or 2, wherein the chloroprene-based polymer contains a 2,3-dichloro-1,3-butadiene monomer unit.

4.   The chloroprene-based polymer latex of Claim 3, wherein the chloroprene-based polymer contains 1 to 25% by mass of 2,3-dichloro-1,3-butadiene monomer units with respect to 100% by mass in total of chloroprene monomer units and 2,3-dichloro-1,3-butadiene monomer units.

5.   The chloroprene-based polymer latex of any one of Claims 1 to 4, wherein a toluene-insoluble content of a solid content obtained by freeze-drying the chloroprene-based polymer latex is 45 to 85% by mass.

**6.** A dip-molded product using the chloroprene-based polymer latex of any one of Claims 1 to 5.

**7.** The dip-molded product of Claim 6, wherein the dip-molded product contains a metal oxide and an antioxidant.

**8.** The dip-molded product of Claim 7, wherein:
the dip-molded product is an industrial or general household glove, a medical glove, a balloon, a catheter, or a boot.

## INTERNATIONAL SEARCH REPORT

| International application No. |
| --- |
| **PCT/JP2023/011786** |

| | |
| --- | --- |
| **A.** | **CLASSIFICATION OF SUBJECT MATTER** |

***C08L 11/02***(2006.01)i; ***C08F 36/18***(2006.01)i; ***C08F 236/18***(2006.01)i; ***C08K 3/22***(2006.01)i
FI: C08L11/02; C08F236/18; C08K3/22; C08F36/18

According to International Patent Classification (IPC) or to both national classification and IPC

| | |
| --- | --- |
| **B.** | **FIELDS SEARCHED** |

Minimum documentation searched (classification system followed by classification symbols)

C08L11/02; C08F36/18; C08F236/18; C08K3/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2019-143002 A (TOSOH CORP) 29 August 2019 (2019-08-29)<br>tables 1-2, examples, comparative examples, etc. | 1-8 |
| A | JP 7-292165 A (DENKI KAGAKU KOGYO KK) 07 November 1995 (1995-11-07) | 1-8 |
| A | WO 2014/017216 A1 (DENKI KAGAKU KOGYO KK) 30 January 2014 (2014-01-30) | 1-8 |
| P, X | WO 2022/202254 A1 (DENKA COMPANY LTD) 29 September 2022 (2022-09-29)<br>tables 1-3, examples 5-7, comparative examples 1, 3, 5, etc. | 1-8 |
| P, X | WO 2022/202556 A1 (DENKA COMPANY LTD) 29 September 2022 (2022-09-29)<br>tables 2-3, example 7, comparative example 5, etc. | 1-8 |

☐ Further documents are listed in the continuation of Box C.　　☑ See patent family annex.

| | |
| --- | --- |
| *　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
| --- | --- |
| **01 May 2023** | **16 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/011786**

| Patent document cited in search report | | | Publication date (day/month/year) | Patent family member(s) | | | Publication date (day/month/year) |
|---|---|---|---|---|---|---|---|
| JP | 2019-143002 | A | 29 August 2019 | (Family: none) | | | |
| JP | 7-292165 | A | 07 November 1995 | US | 5523355 | A | |
| | | | | EP | 679683 | A1 | |
| WO | 2014/017216 | A1 | 30 January 2014 | US | 2015/0183900 | A1 | |
| | | | | EP | 2878605 | A1 | |
| | | | | CN | 104470958 | A | |
| WO | 2022/202254 | A1 | 29 September 2022 | (Family: none) | | | |
| WO | 2022/202556 | A1 | 29 September 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014114342 A
- WO 2019009038 A
- JP 2019143002 A
- WO 2021132460 A